(19) Europäisches Patentamt European Patent Office Office européen des brevets

(11) **EP 3 795 375 B1**

(12) **EUROPEAN PATENT SPECIFICATION**

(45) Date of publication and mention
of the grant of the patent:
**09.03.2022 Bulletin 2022/10**

(21) Application number: **20191491.8**

(22) Date of filing: **18.08.2020**

(51) International Patent Classification (IPC):
*B60C 1/00* (2006.01)      *C08C 19/22* (2006.01)
*C08C 19/25* (2006.01)      *C08C 19/02* (2006.01)
*C08F 236/10* (2006.01)      *C08F 4/48* (2006.01)

(52) Cooperative Patent Classification (CPC):
(C-Sets available)
**C08C 19/22; B60C 1/0016; C08C 19/02;
C08C 19/25; C08F 236/10;** B60C 2011/0016
(Cont.)

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2019 JP 2019169434**

(43) Date of publication of application:
**24.03.2021 Bulletin 2021/12**

(73) Proprietor: **Sumitomo Rubber Industries, Ltd.
Kobe-shi, Hyogo 651-0072 (JP)**

(72) Inventors:
• **NAKANO, Shinya
Kobe-shi, Hyogo 651-0072 (JP)**
• **KAWAMURA, Takanobu
Kobe-shi, Hyogo 651-0072 (JP)**

(74) Representative: **TBK
Bavariaring 4-6
80336 München (DE)**

(56) References cited:
**US-A1- 2011 301 280**

• **DATABASE WPI Week 201846 Thomson
Scientific, London, GB; AN 2018-49492F
XP002801708, & WO 2018/110396 A1
(BRIDGESTONE CORP) 21 June 2018
(2018-06-21)**
• **DATABASE WPI Week 201931 Thomson
Scientific, London, GB; AN 2019-33125R
XP002801709, & JP 2019 056083 A (SUMITOMO
RUBBER IND LTD) 11 April 2019 (2019-04-11)**

(52) Cooperative Patent Classification (CPC): (Cont.)

C-Sets
**C08F 236/10, C08F 4/48**

**Description**

BACKGROUND OF THE INVENTION

Field of the Invention

The present invention relates to a pneumatic tire. Specifically, the present invention relates to a pneumatic tire and a wear performance evaluation method for a vulcanized rubber for forming the tire.

Description of the Background Art

A tire includes various members each formed by using a vulcanized rubber. One of these members is a tread. During running of a vehicle, each tire comes into contact with a road surface at the tread thereof. Due to the contact with the road surface, the tire wears gradually. Due to the wear of the tire, the tire performance deteriorates. In recent years, further improvement of the wear resistance of pneumatic tires is required.
A technology for evaluating the wear performance of a vulcanized rubber is important in developing a tire having excellent wear resistance. For example, in a conventional evaluation method by a running test, first, a tire member is formed using a vulcanized rubber to be evaluated. Next, a tire formed so as to include the tire member is mounted to a test vehicle, and the test vehicle is caused to run, thereby evaluating the wear performance of the vulcanized rubber. In addition, a method for evaluating the wear performance of the vulcanized rubber by rotating the tire on a drum of a drum type tester has also been proposed.
In the running tests using the actual vehicle and the drum type tester, for each of various vulcanized rubbers having different makeups, it is necessary to produce tires. In addition, to accurately evaluate the wear performance of each vulcanized rubber, a long running time is required.
Various wear testers for evaluating the wear performance of a vulcanized rubber by using a test piece formed from the vulcanized rubber without actually producing a tire, have also been proposed. However, evaluation results obtained by these wear testers do not necessarily correlate with evaluation results by a running test and wear resistance evaluation in the market.
As for wear of vulcanized rubbers, physical wear due to crack growth and chemical wear accompanied by mechanochemical reactions are known. According to the findings of the present inventors, it has been speculated that the contribution of chemical wear to the market's evaluation of the wear resistance of tires is not small, but a technology for evaluating chemical wear separately from physical wear has not existed hitherto. Therefore, a pneumatic tire that can satisfy high wear resistance demanded in the market has not been realized yet. An object of the present invention is to provide a pneumatic tire having excellent wear resistance.
In addition, from the viewpoint of speeding up tire development, there is also a demand for a method for easily and accurately evaluating the wear performance of a vulcanized rubber that reflects the market's evaluation of wear resistance. Another object of the present invention is to provide a method for accurately evaluating the wear performance of a vulcanized rubber used for the pneumatic tire.

SUMMARY OF THE INVENTION

As a result of a thorough study, the present inventors have focused on the fact that the chemical wear of a vulcanized rubber has a great influence on the wear resistance of a tire including a member formed from the vulcanized rubber. Then, the present inventors have completed the present invention by finding a method, for evaluating chemical wear separately from physical wear, which has not existed hitherto.
Specifically, a pneumatic tire according to the present invention includes a member formed from a vulcanized rubber having a makeup for which a change rate R (%) defined by the following equation using a wear amount Ci per unit time (unit: cm$^3$/min) obtained in a wear test in a nitrogen atmosphere (room temperature, oxygen concentration: 0.1% by volume or less, relative humidity: 15%) and a wear amount Ca per unit time (unit: cm$^3$/min) obtained in a wear test in an air atmosphere (room temperature, oxygen concentration: 21% by volume, relative humidity: 50%) is not greater than 60%.

$$\text{Change rate } R\ (\%) = (Ca\text{-}Ci)/Ca \times 100$$

The wear amount Ci and the wear amount Ca are each obtained by: preparing a cylindrical test piece (outer diameter: 78 mm, inner diameter: 34 mm, width in the axial direction thereof: 18 mm) formed from the vulcanized rubber, and a testing device including a grinding plate having one linear projection (an equilateral triangle shape with a side length of 5 mm in a cross-sectional view, a radius of curvature of a distal end portion is 0.01 mm); rotating the test piece in the circumferential direction thereof at a rotation speed of 60 rpm and a slip angle of 0°, in a state where the surface of the grinding plate on which the linear projection is formed is pressed against the outer peripheral surface of the test piece and a load of 0.8 kgf is applied to the test piece, thereby conducting a wear test; and dividing a wear volume (unit: $cm^3$), which is obtained by dividing a mass change of the test piece measured before and after the wear test by the specific gravity of the vulcanized rubber, by the total rotation time (unit: min) of the test piece.

Preferably, the member formed from the vulcanized rubber is formed by heating and pressurizing a rubber composition. The rubber composition contains, as a base rubber, a styrene-butadiene rubber in which a degree of hydrogenation of conjugated diene moieties is not less than 50% by mole and not greater than 99% by mole. Preferably, a proportion of the styrene-butadiene rubber in the base rubber is not less than 40% by mass and not greater than 100% by mass.

Preferably, the member formed from the vulcanized rubber is a tread.

According to another aspect, a wear performance evaluation method for a vulcanized rubber according to the present invention includes:

(1) a preparation step of preparing at least two test pieces formed from a vulcanized rubber having the same makeup;
(2) a first measurement step of conducting a wear test in an inert atmosphere and obtaining a wear amount Ci per unit time;
(3) a second measurement step of conducting a wear test in an air atmosphere and obtaining a wear amount Ca per unit time; and
(4) an evaluation step of evaluating wear resistance of the vulcanized rubber on the basis of a change rate R (%) calculated by the equation: R = (Ca-Ci)/Ca $\times$ 100 using the wear amounts Ci and Ca.

Preferably, an oxygen concentration of the inert atmosphere is not greater than 15% by volume. Preferably, the inert atmosphere is a nitrogen atmosphere or an argon atmosphere.

Preferably, in each of the first measurement step and the second measurement step, the wear test is conducted using a testing device having a pseudo road surface. The wear test is conducted by moving the pseudo road surface and the test piece relative to each other for a predetermined time in a state where the pseudo road surface is pressed against the test piece and a load is applied to the test piece. A wear volume is obtained by dividing a mass change of the test piece measured before and after the wear test by a specific gravity of the vulcanized rubber. The wear amount Ci and the wear amount Ca per unit time were each obtained by dividing the wear volume by the time of the relative movement.

Preferably, each of the test pieces has a cylindrical shape. Preferably, the pseudo road surface has one or a large number of linear projections. Preferably, the test piece is rotated in the circumferential direction thereof in a state where said one or said large number of linear projections are pressed against an outer peripheral surface of the test piece and a load is applied to the test piece, thereby conducting the wear test.

The member included in the pneumatic tire according to the present invention is formed from the vulcanized rubber having a change rate R not greater than 60%. The member formed from the vulcanized rubber is less susceptible to chemical wear. In the tire including the member formed from the vulcanized rubber, high wear resistance is achieved. With the evaluation method according to the present invention, the wear performance of the vulcanized rubber can be evaluated separately for physical wear and for chemical wear. Accordingly, an evaluation result reflecting wear resistance by running of an actual vehicle is obtained.

BRIEF DESCRIPTION OF THE DRAWINGS

FIG. 1 is a cross-sectional view of a pneumatic tire according to an embodiment of the present invention;
FIG. 2 is a flowchart showing an evaluation method according to an embodiment of the present invention;
FIG. 3 is a front view of a test piece prepared in a preparation step in FIG. 2;
FIG. 4 is a cross-sectional view of the test piece in FIG. 3 taken along a line IV-IV;
FIG. 5 is a plan view of a part of a grinding plate used in each measurement step in FIG. 2;
FIG. 6 is a partial cross-sectional view of the grinding plate in FIG. 5 taken along a line VI-VI; and
FIG. 7 is a schematic diagram for describing a wear test in each measurement step in FIG. 2.

DESCRIPTION OF THE PREFERRED EMBODIMENTS

Hereinafter, the present invention will be described in detail based on preferred embodiments with appropriate reference to the drawings. However, the present invention is not limited to the following embodiments, and various modifications may be made without departing from the scope indicated by the claims. In the present description, unless otherwise specified, "X to Y" means "not less than X and not greater than Y", and "%" means "% by mass".

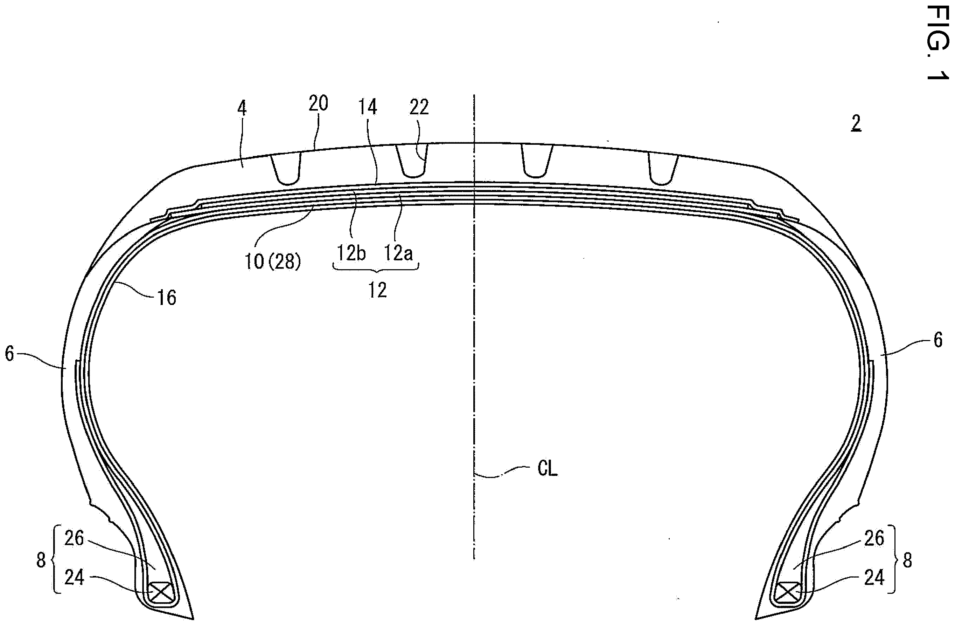

FIG. 1 is a cross-sectional view of a tire 2 according to an embodiment of the present invention. In FIG. 1, the up-down direction is the radial direction of the tire 2, the right-left direction is the axial direction of the tire 2, and the direction perpendicular to the surface of the sheet of FIG. 1 is the circumferential direction of the tire 2. In FIG. 1, an alternate long and short dash line CL represents the equator plane of the tire 2. For each constituent member, only the contour of a cross-section thereof is shown in FIG. 1.

The tire 2 includes a tread 4, a pair of sidewalls 6, a pair of beads 8, a carcass 10, a belt 12, a band 14, and an inner liner 16. The tire 2 is a pneumatic tire to be mounted to a passenger car.

The tread 4 has a shape that is convex outward in the radial direction. The tread 4 has a tread surface 20. Grooves 22 are formed on the tread surface 20. The tread 4 is formed from a vulcanized rubber.

Each sidewall 6 extends substantially inward in the radial direction from an end of the tread 4. Each bead 8 is located radially inward of the sidewall 6. The bead 8 includes a core 24 and an apex 26 extending radially outward from the core 24. The carcass 10 includes a carcass ply 28. The carcass ply 28 extends between and on both beads 8 along the tread 4 and the sidewalls 6. The carcass ply 28 is turned up around each core 24 from the inner side toward the outer side in the axial direction.

The belt 12 is located radially inward of the tread 4 and laminated on the carcass 10. The belt 12 includes an inner layer 12a and an outer layer 12b. The band 14 is laminated radially outward of the belt 12. The band 14 includes a cord and a topping rubber, which are not shown. The cord extends substantially in the circumferential direction and is spirally wound. The band 14 has a so-called jointless structure. The inner liner 16 is located radially inward of the carcass 10 and joined to the inner surface of the carcass 10.

In the tire 2 according to the embodiment, the vulcanized rubber forming the tread 4 has a change rate R (%) not greater than 60%, and the change rate R is defined by the equation: R (%) = (Ca-Ci)/Ca $\times$ 100, using a wear amount Ci per unit time (unit: $cm^3$/min) obtained in a wear test in a nitrogen atmosphere (room temperature, oxygen concentration: 0.1% by volume or less, relative humidity: 15%) and a wear amount Ca per unit time (unit: $cm^3$/min) obtained in a wear test in an air atmosphere (room temperature, oxygen concentration: 21% by volume, relative humidity: 50%). The wear amount Ci and the wear amount Ca are each obtained by: preparing a cylindrical test piece (outer diameter: 78 mm, inner diameter: 34 mm, width in the axial direction thereof: 18 mm) formed from the vulcanized rubber, and a testing device including a grinding plate having one linear projection (an equilateral triangle shape with a side length of 5 mm in a cross-sectional view, the radius of curvature of a distal end portion is 0.01 mm); rotating the test piece in the circumferential direction thereof at a rotation speed of 60 rpm and a slip angle of 0°, in a state where the surface of the grinding plate on which the linear projection is formed is pressed against the outer peripheral surface of the test piece and a load of 0.8 kgf is applied to the test piece, thereby conducting a wear test; and dividing a wear volume (unit: $cm^3$), which is obtained by dividing a mass change of the test piece measured before and after the wear test by the specific gravity of the vulcanized rubber, by the total rotation time (unit: min) of the test piece.

In the wear test in the nitrogen atmosphere, physical wear mainly occurs. In the above equation, Ci is mainly a wear amount per unit time based on physical wear. Meanwhile, in the wear test in the air atmosphere, chemical wear and physical wear occur. In the above equation, Ca is a total wear amount per unit time based on chemical wear and physical wear. Therefore, the change rate R defined by the above equation is a value indicating the proportion of chemical wear in total wear the vulcanized rubber is subjected to. A vulcanized rubber having a makeup having a change rate R not greater than 60% has resistance to chemical wear. The tire 2 including the tread 4 that is formed from the vulcanized rubber has excellent wear resistance. Another member forming a part of the tire 2 may be formed from the vulcanized rubber.

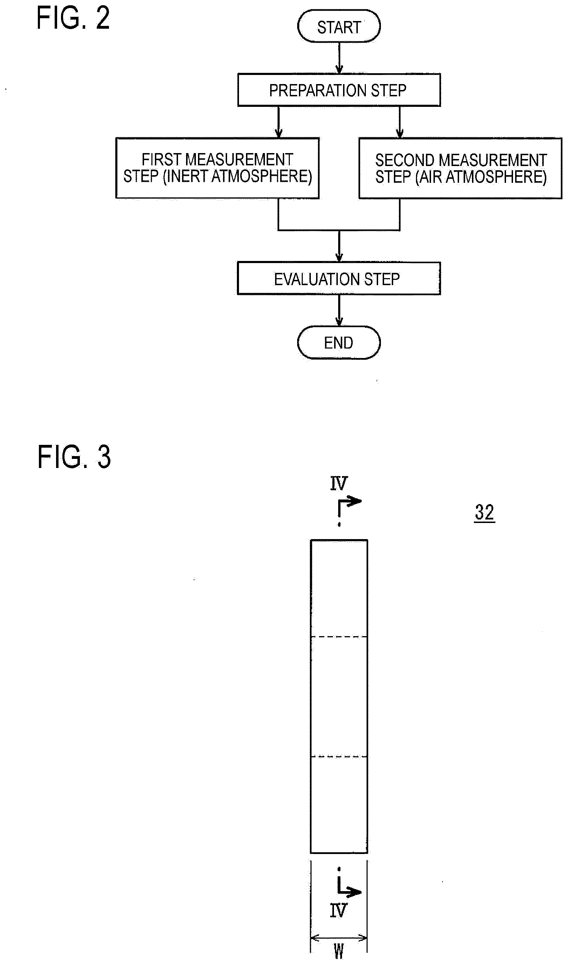

Here, a change rate R is an index indicating resistance to chemical wear of a vulcanized rubber. The change rate R can reflect the market's evaluation of the wear resistance of a tire including a member formed from the vulcanized rubber. By using the change rate R as an index, the wear performance of the vulcanized rubber forming a constituent member of a tire can be accurately and easily evaluated. In other words, the method for obtaining the change rate R is a method for evaluating the wear performance of the vulcanized rubber. Hereinafter, an evaluation method according to an embodiment of the present invention will be specifically described with reference to FIGS. 2 to 7.

FIG. 2 shows a flowchart for obtaining the change rate R by using the evaluation method according to the embodiment of the present invention. As shown, the evaluation method includes at least a preparation step, a first measurement step in an inert atmosphere, a second measurement step in an air atmosphere, and an evaluation step. As long as the advantageous effects of the present invention are obtained, the evaluation method can further include another step.

In the preparation step, at least two test pieces formed from a vulcanized rubber having the same makeup are prepared. In this embodiment, a first test piece to be subjected to the first measurement step and a second test piece to be subjected to the second measurement step are prepared. Preferably, the first test piece and the second test piece

have the same shape. Hereinafter, the first test piece and the second test piece are sometimes collectively referred to as "test piece".

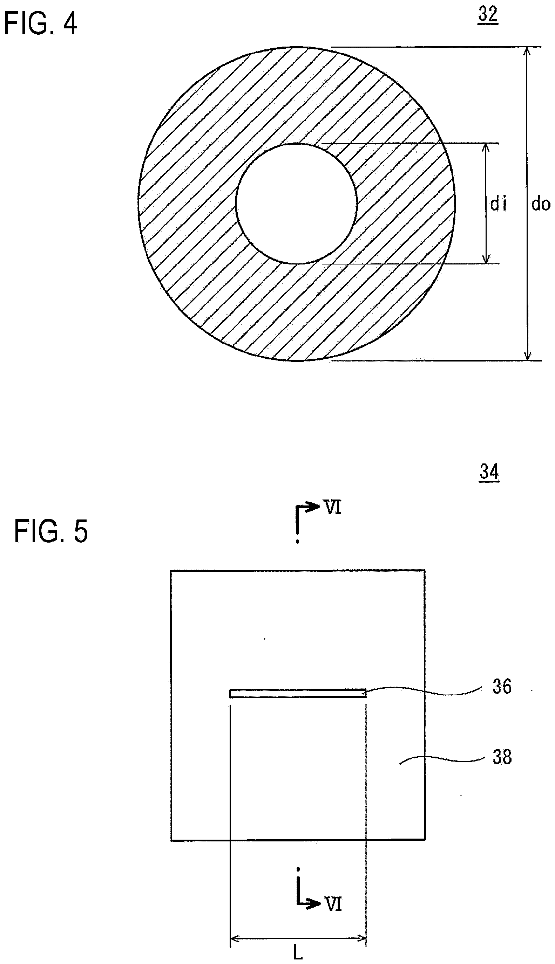

FIG. 3 is a front view of a test piece 32 prepared in this embodiment. In FIG. 3, the up-down direction is a circumferential direction, and the right-left direction is an axial direction. FIG. 4 is a cross-sectional view taken along a line IV-IV in FIG. 3. In FIG. 4, the direction perpendicular to the surface of the sheet of FIG. 4 is the axial direction.

As shown in FIGS. 3 and 4, the test piece 32 has a cylindrical shape. A double-headed arrow W shown in FIG. 3 represents the width, in the axial direction, of the test piece 32. The width W, in the axial direction, of the test piece 32 is 18 mm. Double-headed arrows di and do shown in FIG. 4 represent the inner diameter and the outer diameter of the test piece 32, respectively. The inner diameter di of the test piece 32 is 34 mm, and the outer diameter do of the test piece 32 is 78 mm.

In the first measurement step, a wear test is conducted in an inert atmosphere, and the wear amount $C_i$ per unit time (unit: $cm^3$/min) is obtained. In the present description, the inert atmosphere means an atmosphere in which chemical action on the vulcanized rubber does not substantially occur or is small. In the first measurement step of this embodiment, a wear test is conducted in a nitrogen atmosphere (room temperature, oxygen concentration: 0.1% by volume or less, relative humidity: 15%).

In the second measurement step, a wear test is conducted in an air atmosphere, and the wear amount $C_i$ per unit time (unit: $cm^3$/min) is obtained. In the present description, the air atmosphere means an atmosphere of normal air. In the second measurement step of this embodiment, a wear test is conducted in an air atmosphere (room temperature, oxygen concentration: 21% by volume, relative humidity: 50%).

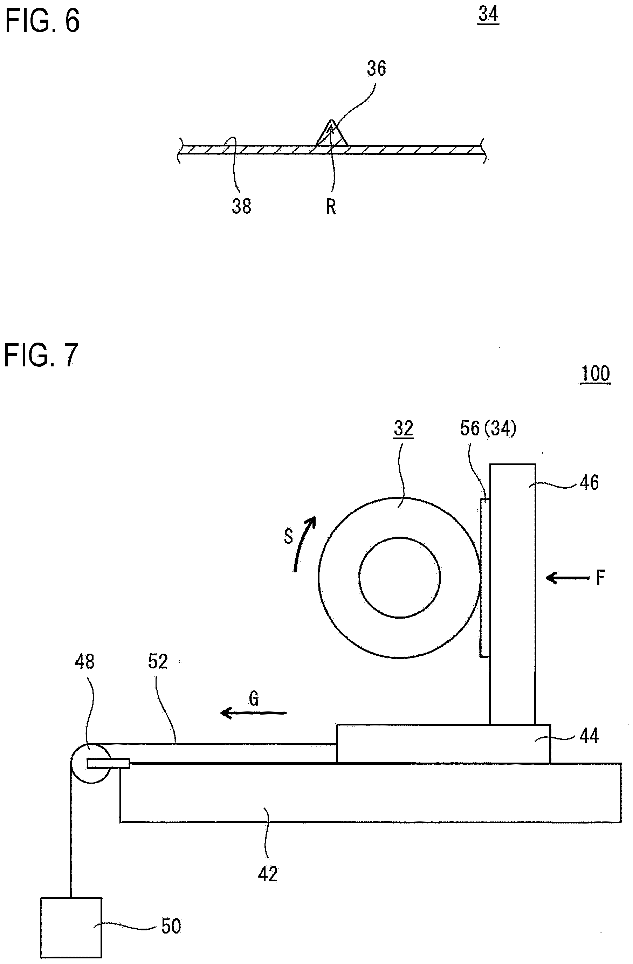

In this embodiment, a grinding plate having a linear projection is used in the wear tests in the first measurement step and the second measurement step. FIG. 5 is a plan view of a grinding plate 34 used in the wear tests. In FIG. 5, the right-left direction is a longitudinal direction, the up-down direction is a width direction, and the direction perpendicular to the surface of the sheet of FIG. 5 is a height direction. FIG. 6 is a cross-sectional view taken along a line VI-VI in FIG. 5. In FIG. 6, the right-left direction is the width direction, and the up-down direction is the height direction.

As shown, the grinding plate 34 has a reference surface 38 and one linear projection 36 projecting from the reference surface 38. A cross-sectional shape of the linear projection 36 is a mountain shape. Specifically, the cross-sectional shape of the linear projection 36 is an equilateral triangle shape with a side length of 5 mm. A double-headed arrow L shown in FIG. 5 represents the length of the linear projection 36. In FIG. 6, a distal end portion (top) of the linear projection 36 is indicated as reference character R. The length L of the linear projection 36 is 50 mm, and the radius of curvature of the distal end portion R is 0.01 mm.

FIG. 7 shows a schematic diagram for describing the wear tests in the first measurement step and the second measurement step. In FIG. 7, the up-down direction is the vertical direction, and the right-left direction is a horizontal direction. A testing device 100 is used for the wear tests.

As shown, the testing device 100 includes a fixed base 42 that is installed substantially horizontally, a movable plate 44 that is movably mounted on the fixed base 42, and a pressing plate 46 that is erected on the movable plate 44. A pulley 48 is attached to the fixed base 42. A connection member 52 is attached to the movable plate 44, and is connected to a load member 50 through a pulley 48. The pressing plate 46 has a mounting portion 56.

Although not shown, the testing device 100 includes a holding means for rotatably holding the test piece 32 at a position facing the mounting portion 56, and a rotating means for rotating the test piece 32. FIG. 7 shows a state where the test piece 32 is held with respect to the testing device 100 by the holding means.

In each wear test, the grinding plate 34 is mounted to the mounting portion 56. At this time, the grinding plate 34 is mounted to the mounting portion 56 such that the surface having the linear projection 36 faces the test piece 32 and the longitudinal direction of the linear projection 36 is substantially parallel to the axial direction of the test piece 32. Thereafter, a predetermined load is applied to the load member 50. The load member 50 pulls the movable plate 44, which is connected to the connection member 52 through the pulley 48, in the direction of an arrow G. By this pulling, the linear projection 36 on the grinding plate 34 mounted on the pressing plate 46 on the movable plate 44 is pressed against the test piece 32. At this time, a load is applied to the contact portion between the test piece 32 and the linear projection 36 at a constant pressure in the direction of an arrow F. In the wear test, a load of 0.8 kgf is applied.

Subsequently, in a state where the load is applied to the test piece 32, the testing device 100 is operated, and the test piece 32 is rotated by the rotating means in a direction indicated by an arrow S for a predetermined time, thereby moving the test piece 32 and the grinding plate 34 relative to each other. Specifically, the test piece 32 is rotated at a rotation speed of 60 rpm and a slip angle of 0°. By this rotation, the outer peripheral surface of the test piece 32 is worn. By this wear, a part of the vulcanized rubber forming the outer peripheral surface of the test piece 32 peels off from the test piece 32.

In each of the first measurement step and the second measurement step, after a predetermined time elapses from the time when the testing device 100 is operated, the test piece 32 is removed, and a mass change W before and after the wear test is measured. Next, a wear volume (unit: $cm^3$) is obtained by dividing this mass change by a specific gravity d of the vulcanized rubber forming the test piece 32. Subsequently, a wear amount per unit time (unit: $cm^3$/min)

is obtained by dividing this wear volume by a time for which the test piece 32 and the grinding plate 34 are moved relative to each other, that is, a rotation time (min) of the test piece 32. The method for measuring the specific gravity of the vulcanized rubber will be described later in EXAMPLES.

In the evaluation step, a change rate R (%) is calculated by the following equation, using a wear amount Ci per unit time in the inert atmosphere obtained in the first measurement step and a wear amount Ca per unit time in the air atmosphere obtained in the second measurement step.

$$\text{Change rate R (\%)} = (Ca\text{--}Ci)/Ca \times 100$$

Next, the wear performance of the vulcanized rubber forming the test piece 32 is evaluated using the calculated change rate R (%) as an index. As described above, an evaluation result obtained by using the change rate R as an index reflect the market's evaluation of the wear resistance of the tire 2. By using the change rate R as an index, the wear performance of a vulcanized rubber forming a tire member can be accurately and easily evaluated. Specifically, by applying the makeup of a vulcanized rubber having a change rate R not greater than 60% to a member included in the tire 2, the tire 2 having excellent wear resistance is obtained.

In the tire 2 according to the present invention, the types and number of members formed from the vulcanized rubber having a change rate R not greater than 60% are not particularly limited. From the viewpoint of reducing wear due to contact with a road surface during running, the tread 4 and the sidewall 6 are preferable, and the tread 4 is particularly preferable, as a member formed form the vulcanized rubber.

The method for obtaining a member formed from the vulcanized rubber having a change rate R not greater than 60% is not particularly limited. In addition, an apparatus and a facility for producing the tire 2 including the member formed from the vulcanized rubber are not particularly limited, and a known apparatus and facility can be used. For example, the tire 2 including the tread 4 that is formed from the vulcanized rubber is produced by the following procedure.

First, an unvulcanized rubber composition containing a base rubber and various additives that are normally used in the tire field is prepared so as to have a makeup for which a change rate R is not greater than 60%. Next, the rubber composition is extruded into the shape of the tread 4, and then attached together with other tire members on a known tire-shaping machine, thereby obtaining a raw cover (unvulcanized tire). The raw cover is put into a mold. The outer surface of the raw cover comes into contact with the cavity face of the mold. The inner surface of the raw cover comes into contact with a bladder or a core. The raw cover is pressurized and heated in the mold. Due to the pressurization and the heating, the rubber composition of the raw cover flows. Due to the heating, a crosslinking reaction of the rubber takes place to obtain the tire 2. An uneven pattern is formed on the tire 2 by using a mold having an uneven pattern on its cavity surface.

The types of the base rubber and the various additives to be blended in the rubber composition are not particularly limited as long as the change rate R obtained by the above-described evaluation method is not greater than 60%. Examples of preferable base rubbers include natural rubber, styrene-butadiene rubber, butadiene rubber, epoxidized natural rubber, isoprene rubber, ethylene-propylene-diene rubber, chloroprene rubber, acrylonitrile-butadiene rubber, acrylonitrile-butadiene-styrene rubber. Two or more rubbers may be used in combination as the base rubber.

From the viewpoint of balance between wear resistance and other tire performance, a particularly preferable base rubber is a styrene-butadiene rubber in which the degree of hydrogenation of conjugated diene moieties is not less than 50% by mole and not greater than 99% by mole. From the viewpoint of wear resistance, the degree of hydrogenation of conjugated diene moieties of the styrene-butadiene rubber is more preferably not less than 55% by mole and particularly preferably not less than 60% by mole. For example, if the degree of hydrogenation of conjugated diene moieties exceeds 99% by mole so that unsaturated bonds in the rubber molecular chain are extremely reduced as in non-diene rubbers such as isobutylene-isoprene-rubber, the vulcanization reaction rate is decreased, and tire performance such as low fuel consumption performance and wet grip performance may deteriorate due to low affinity with a reinforcing agent such as silica. From this viewpoint, the degree of hydrogenation of conjugated diene moieties of the styrene-butadiene rubber is more preferably not greater than 98% by mole.

From the viewpoint of wear resistance, the proportion of the styrene-butadiene rubber in which the degree of hydrogenation of conjugated diene moieties is not less than 50% by mole and not greater than 99% by mole, in the base rubber, is preferably not less than 40% by mass, more preferably not less than 60% by mass, further preferably not less than 80% by mass, and particularly preferably not less than 90% by mass, and the upper limit thereof is 100% by mass. From the viewpoint of balance with other tire performance, a rubber composition containing no isobutylene-isoprene-rubber is preferable.

Examples of the additives to be blended together with the base rubber include fillers such as carbon black and silica, silane coupling agents, oils, waxes, zinc oxide, antioxidants, processing aids, resins, crosslinking agents, vulcanizing agents, vulcanization accelerators, and vulcanization accelerator aids. As long as the advantageous effects of the present invention are not impaired, other additives that are not described in the present description may also be used.

In the tire 2 according to the present invention, the makeup of the rubber composition is not particularly limited. The makeup of the composition is adjusted as appropriate according to the makeup of a conventionally known tire rubber composition such that the change rate R obtained by the above-described evaluation method is not greater than 60%. A typical example is a makeup for tread rubber.

In the evaluation method according to the present invention, the shape of the test piece 32 prepared in the preparation step is not particularly limited. From the viewpoint of easily reproducing the state during running of an actual vehicle in the wear test, the cylindrical shape shown in FIGS. 3 and 4 is preferable. The number of test pieces 32 to be prepared in the preparation step is at least two, one of the test pieces is subjected to the first measurement step, and the other test piece is subjected to the second measurement step. From the viewpoint of evaluation accuracy, two or more test pieces 32 are preferably subjected to each measurement step.

The method for preparing the test piece 32 is also not particularly limited. For example, the test piece 32 may be prepared by: putting the above-described base rubber and various additive into an open roll, a Banbury mixer, or the like and kneading these materials therein to prepare a rubber composition; and heating and pressurizing the rubber composition in a mold having a predetermined shape. Alternatively, the test piece 32 may be prepared by press-vulcanizing the prepared rubber composition to produce a rubber sheet, cutting the rubber sheet as appropriate, and attaching the cut rubber sheet to the outer peripheral surface of a rotating body having the basic structure shown in FIGS. 3 and 4. Still alternatively, the test piece 32 may be prepared by: extruding the prepared rubber composition into the shape of the tread 4, attaching the extruded rubber composition together with other tire members, and heating and pressurizing these members in a vulcanizing machine, thereby producing the tire 2; and attaching a sheet-shaped rubber piece cut out from the surface of the tread 4 of the tire 2, to the outer peripheral surface of the above rotating body. The material of the rotating body to which the rubber sheet or the sheet-shaped rubber piece is attached is not particularly limited, but, from the viewpoint of improving the evaluation accuracy, a vulcanized rubber having a hardness substantially equal to that of the rubber sheet or the rubber piece is preferable.

As long as the advantageous effects of the present invention are not impaired, the size of the test piece 32 is not particularly limited. For example, in the case of forming the test piece 32 in a cylindrical shape, from the viewpoint of accuracy of measurement of a mass change, the width W, in the axial direction, of the test piece 32 is preferably not less than 15 mm and more preferably not less than 18 mm. From the viewpoint of making the device compact, the width W in the axial direction is preferably not greater than 22 mm and more preferably not greater than 20 mm.

From the viewpoint of accuracy of measurement of a mass change, the outer diameter do of the cylindrical test piece 32 is preferably not less than 50 mm and more preferably not less than 60 mm. From the viewpoint of making the device compact, the outer diameter do is preferably not greater than 120 mm and more preferably not greater than 100 mm. The inner diameter di of the test piece 32 is adjusted as appropriate in accordance with the outer diameter do. From the viewpoint of reproducing the running state on an actual road surface, the inner diameter di of the test piece 32 is preferably not less than 10 mm and more preferably not less than 15 mm. From the viewpoint of inhibiting deformation of the test piece 32 during the wear test, the inner diameter di is preferably not greater than 45 mm.

In the case of attaching the rubber sheet or the sheet-shaped rubber piece to the rotating body having the basic structure shown in FIGS. 3 and 4 to obtain the test piece 32, from the viewpoint of improving the evaluation accuracy, the thickness of the rubber sheet or the rubber piece is preferably not less than 0.5 mm and more preferably not less than 1 mm. The thickness of the rubber sheet or the rubber piece is preferably not greater than 4 mm.

The inert atmosphere in the first measurement step is not particularly limited as long as chemical action on the vulcanized rubber forming the test piece 32 is inhibited. The inert atmosphere may be, for example, an inert gas atmosphere such as nitrogen, carbon dioxide, argon, and helium, may be in a vacuum state, or may be in a reduced pressure state. Two or more inert gases may be used in combination. A nitrogen atmosphere or an argon atmosphere is preferable.

From the viewpoint of inhibiting chemical action on the vulcanized rubber, the oxygen concentration of the inert atmosphere is preferably not greater than 15% by volume, more preferably not greater than 12% by volume, further preferably not greater than 10% by volume, and particularly preferably not greater than 8% by volume. The lower limit of the oxygen concentration of the inert atmosphere is not particularly limited, and sufficient evaluation accuracy is achieved at an oxygen concentration of 5% by volume. From the viewpoint of simplifying the wear test, the lower limit of the oxygen concentration of the inert atmosphere is 0.001% by volume.

The air atmosphere in the second measurement step means an atmosphere having an oxygen concentration of 20 to 22% by volume, and normally means an atmosphere of air having an oxygen concentration of 21% by volume and a nitrogen concentration of 78% by volume.

As long as the advantageous effects of the present invention are obtained, other gases may be included in the inert atmosphere and the air atmosphere. For example, when water vapor is included as another gas, the relative humidity thereof is preferably not less than 40% and not greater than 60% in the air atmosphere, and preferably not less than 10% and not greater than 20% in the inert atmosphere.

The test temperature of the wear test in each of the first measurement step and the second measurement step is determined as appropriate according to the environment in which the vulcanized rubber to be evaluated for wear performance is used. Unless otherwise limited, the test temperature of the wear test is preferably not lower than 15°C and not higher than 35°C, and more preferably not lower than 22°C and not higher than 26°C. The "room temperature" in the present description normally means not lower than 22°C and not higher than 26°C.

In the evaluation method according to the present invention, a wear tester is used for each wear test. In the first measurement step, the wear tester is installed in an inert atmosphere. In the second measurement step, the wear tester is installed in an air atmosphere. As long as the advantageous effects of the present invention are obtained, the test temperature of each wear test is normally the outside air temperature at the place where the wear tester is installed.

As long as the above-described change rate R can be obtained, the type of the wear tester is not particularly limited. For example, a known wear tester such as a DIN wear tester, a Lambourn wear tester, and a LAT100 wear tester may be used, or the testing device 100 shown in FIG. 7 may be used.

The wear tester normally has a pseudo road surface for wearing a test piece. As long as the objects of the present invention are achieved, the type of the pseudo road surface of the wear tester is not particularly limited. The pseudo road surface may be, for example, a pseudo road surface obtained by attaching grindstone, sandpaper, safety walk, or the like, or may be an asphalt road surface, a concrete road surface, or the like. In the case where grindstone is used as a pseudo road surface, the grain size of the grindstone is preferably #60 to #240.

In each wear test, in a state where the pseudo road surface is pressed against a test piece formed from a vulcanized rubber and a load is applied to the test piece at a predetermined pressure, the test piece and the pseudo road surface are moved relative to each other for a predetermined time. In the present invention, the method for moving the test piece and the pseudo road surface relative to each other is not particularly limited. The test piece may be fixed and the pseudo road surface may be moved, the pseudo road surface may be fixed and the test piece may be moved, or both the test piece and the pseudo road surface may be mutually moved.

For example, in the case of conducting the wear test on the cylindrical test piece 32 using the testing device 100 shown in FIG. 7, in a state where a pseudo road surface of the testing device 100 is pressed against the test piece 32 and a load is applied to the test piece 32, the test piece 32 is rotated in the circumferential direction thereof, thereby moving the test piece 32 and the pseudo road surface relative to each other. As long as the advantageous effects of the present invention are obtained, the load to the test piece is not particularly limited. From the viewpoint of reproducing the running condition on an actual road surface, a load of preferably 0.5 kgf or greater and more preferably 0.6 kgf or greater is applied to the test piece 32. From the viewpoint of preventing deformation and breakage of the test piece 32, a load of preferably 4.0 kgf or less and more preferably 3.5 kgf or less is applied to the test piece 32.

From the viewpoint of test efficiency, the rotation speed of the test piece 32 is preferably not less than 10 rpm and more preferably not less than 30 rpm. From the viewpoint of inhibiting heat generation and deformation of the test piece 32, the rotation speed is preferably not greater than 180 rpm and more preferably not greater than 120 rpm. The rotation time of the test piece 32 is selected as appropriate such that the wear amounts Ci and Ca that can be evaluated are obtained. From the viewpoint of measurement accuracy, the rotation time is preferably not shorter than 5 minutes. From the viewpoint of inhibiting heat generation and deformation of the test piece 32, the rotation time is not longer than 120 minutes.

In each of the first measurement step and the second measurement step, the wear test may be conducted in a state where a slip angle is applied to the test piece 32. The slip angle is an angle formed between the rotation surface (equator plane) of the cylindrical test piece 32 and the direction of movement relative to the pseudo road surface. As long as the objects of the present invention are achieved, the slip angle is not particularly limited. From the viewpoint of evaluation accuracy and wear efficiency, the slip angle is preferably 0° to 15°.

As the pseudo road surface of the testing device 100, the grinding plate 34 having one or a large number of linear projections 36 is preferable. In the evaluation method according to the present invention, the number and the arrangement of the linear projections 36 of the grinding plate 34 are not particularly limited, and are selected as appropriate in accordance with the shape of the test piece 32. As long as the advantageous effects of the present invention are obtained, the material of the grinding plate 34 and the material of each linear projection 36 may be the same or different from each other. From the viewpoint of test efficiency and durability, aluminum, stainless steel, iron, etc., are suitably used as the materials.

The length L of the linear projection 36 is not particularly limited, and is selected as appropriate in accordance with the shape and the size of the test piece 32. In the case of using the grinding plate 34 showing in FIGS. 5 and 6 for the cylindrical test piece 32 shown in FIGS. 3 and 4, from the viewpoint of ensuring contact with the test piece 32, the length L of the linear projection 36 is preferably larger than the width W, in the axial direction, of the test piece 32. Specifically, the length L of the linear projection 36 is preferably not less than 20 mm and more preferably not less than 30 mm. The upper limit of the length L is not particularly limited, but, from the viewpoint of making the device compact, the length L is preferably not greater than 200 mm.

As long as the objects of the present invention are achieved, the cross-sectional shape of the linear projection 36 is not particularly limited, and a mountain shape, a rectangular shape, a polygonal shape, or the like is selected as appropriate. The grinding plate 34 may have a plurality of linear projections 36 having different cross-sectional shapes.

In the case of the linear projection 36 having a mountain cross-sectional shape shown in FIGS. 5 and 6, from the viewpoint of wear efficiency, the radius of curvature of the distal end portion R of the linear projection 36 is preferably not greater than 1.00 mm, more preferably not greater than 0.80 mm, and particularly preferably not greater than 0.60 mm. From the viewpoint of durability, the lower limit of the radius of curvature is 0.01 mm. The radius of curvature of the linear projection 36 is measured in the cross-section of FIG. 6.

From the viewpoint of easily reproducing the running state on an actual road surface in the wear test, the height of the linear projection 36 is preferably not less than 1.0 mm and more preferably not less than 1.5 mm. From the viewpoint of preventing breakage of the test piece 32, the height is preferably not greater than 10 mm. In the case where the grinding plate 34 has a plurality of linear projections 36, the pitch between each linear projection 36 is preferably not less than 0.5 mm and not greater than 6.0 mm.

As described above, the evaluation result of the wear performance of the vulcanized rubber obtained by the evaluation method according to the present invention correlates with the market's evaluation result of the wear resistance of the tire 2 including the member formed from the vulcanized rubber. In the present description, the dimensions and angles of the members of the tire 2 are measured in a state where the tire 2 is mounted on a normal rim and inflated with air to a normal internal pressure and a normal load is applied to the tire 2. In the present description, the normal rim means a rim specified in a standard on which the tire 2 is based. The "standard rim" in the JATMA standard, the "Design Rim" in the TRA standard, and the "Measuring Rim" in the ETRTO standard are normal rims. In the present description, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. In the case of the tire 2 for a passenger car, the dimensions and angles are measured in a state where the internal pressure is 180 kPa. In the present description, the normal load means a load specified in the standard on which the tire 2 is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

EXAMPLES

Hereinafter, the advantageous effects of the present invention will be clarified by giving specific experimental examples, but the present invention should not be construed in a limited manner based on the description of the experimental examples. In the following experimental examples, unless otherwise specified, the test temperature is room temperature.

[Test 1]

In Test 1, a plurality of test pieces were prepared by using rubber compositions having different makeups, the wear test shown in FIG. 7 was conducted, and a change rate R (%) was calculated from the obtained wear amounts per unit time in the inert atmosphere and in the air atmosphere.

(Synthesis of Base Rubbers)

[Production Example 1]

To a sufficiently nitrogen-purged heat-resistant reaction vessel, 2,000 mL of n-hexane (manufactured by KANTO CHEMICAL CO., INC.), 60 g of styrene (manufactured by KANTO CHEMICAL CO., INC.), 140 g of 1,3-butadiene (manufactured by Tokyo Chemical Industry Co., Ltd.), 2.5 g of tetrahydrofuran (manufactured by KANTO CHEMICAL CO., INC.), and 0.45 mmol of n-butyllithium (1.6 M n-butyllithium/hexane solution, manufactured by KANTO CHEMICAL CO., INC.) were added, followed by stirring at 50°C for 5 hours, to cause a polymerization reaction. Thereafter, 0.15 mol of an amine-based modifier (N,N-bis(trimethylsilyl)aminopropylmethyldiethoxysilane) was added to the reaction solution, followed by stirring at 0°C for 1 hour. Next, while supplying hydrogen gas at a pressure of 0.4 MPa-Gauge, the reaction solution was stirred for 20 minutes to react with unreacted polymer-terminated lithium to obtain lithium hydride. With the hydrogen gas supply pressure set to 0.7 MPa-Gauge and with the reaction temperature set to 90°C, hydrogenation was carried out using a catalyst mainly composed of titanocene dichloride. When the absorption of hydrogen reached the cumulative amount in which a target degree of hydrogenation of 96% by mole was obtained, the reaction temperature was changed to room temperature, the hydrogen pressure was returned to normal pressure, the reaction solution was extracted from the reaction vessel and added into water with stirring, and the solvent was removed by steam stripping, thereby obtaining a styrene-butadiene rubber (SBR 1) of Production Example 1.

For the degree of hydrogenation of conjugated diene moieties of the SBR 1, a solution having a concentration of 15% by mass was prepared using carbon tetrachloride as a solvent, and H$^1$-NMR measurement was performed at 100 MHz. The degree of hydrogenation of conjugated diene moieties of the SBR 1 was calculated from the rate of decrease in the signal cumulative value of the obtained NMR spectrum corresponding to unsaturated bonds.

[Production Example 2]

A stainless steel polymerization reactor having an inner volume of 20 L was washed, dried, and purged with dry nitrogen. Then, 10.2 kg of the above-described n-hexane (specific gravity: 0.68 g/cm$^3$), 547 g of the above-described 1,3-butadiene, 173 g of the above-described styrene, 6.1 ml of the above-described tetrahydrofuran, and 5.0 ml of ethylene glycol diethyl ether were put into the polymerization reactor. Subsequently, 13.1 mmol of the above-described n-butyllithium was added to initiate polymerization. Thereafter, while continuously supplying the 1,3-butadiene and the styrene to the polymerization reactor, the polymerization was continued at a stirring speed of 130 rpm and a temperature of 65°C in the polymerization reactor for 3 hours. The amount of the 1,3-butadiene supplied in this polymerization was 821 g, and the amount of the styrene supplied in this polymerization was 259 g. Next, 11.1 mmol of 3-diethylaminopropyltriethoxysilane was added to the obtained polymer solution while stirring the polymer solution at a stirring speed of 130 rpm, and then the polymer solution was stirred for 15 minutes. Furthermore, 20 mL of a hexane solution containing 0.54 ml of methanol was added to the polymer solution, and the polymer solution was stirred for 5 minutes. Thereafter, 1.8 g of 2-tert-butyl-6-(3-tert-butyl-2-hydroxy-5-methylbenzyl)-4-methylphenyl acrylate (trade name: SUMILIZER GM, manufactured by Sumitomo Chemical Co., Ltd.) and 0.9 g of pentaerythrityl tetrakis (3-laurylthio propionate) (trade name: SUMILIZER TP-D, manufactured by Sumitomo Chemical Co., Ltd.) were added to the polymer solution. Finally, steam stripping was performed, thereby obtaining a styrene-butadiene rubber (SBR 2) of Production Example 2.

(Production of Test Pieces)

In accordance with a makeup shown as A in Table 1 below, the materials other than sulfur and vulcanization accelerators (DPG, CZ) were put into a Banbury mixer having a capacity of 1.7 L (manufactured by Kobe Steel, Ltd.), and kneaded at 150°C for 3 minutes. The obtained kneaded product was taken out from the Banbury mixer, the sulfur and the vulcanization accelerators were added to the kneaded product in the amounts shown in Table 1, and then the mixture was kneaded at 80°C for 3 minutes using an open roll, thereby obtaining an unvulcanized rubber composition. The obtained rubber composition was put into a mold and press-vulcanized at 170°C for 12 minutes, thereby preparing test pieces A1 and A2 having the cylindrical shape (outer diameter: 78 mm, inner diameter: 34 mm, width in the axial direction thereof: 18 mm) shown in FIGS. 3 and 4.

Test pieces B1 to H1 and B2 to H2 were prepared in the same manner as the test pieces A1 and A2, except that the makeup of the rubber composition was changed to those shown as B to D in Table 1 below and E to H in Table 2 below.

[Table 1]

| (Table 1) | | | | (parts by mass) |
|---|---|---|---|---|
| | A | B | C | D |
| Base rubber | | | | |
| SBR 1 | 100 | 100 | 100 | 0 |
| SBR 2 | 0 | 0 | 0 | 100 |
| Carbon black | 5 | 5 | 5 | 5 |
| Silica | 60 | 60 | 60 | 60 |
| Coupling agent | 5.2 | 5.2 | 5.2 | 5.2 |
| Oil | 32 | 32 | 32 | 28 |
| Antioxidant | | | | |
| TMQ | 1 | 5 | 0 | 1 |
| AO | 0 | 0 | 5 | 0 |
| Stearic acid | 2 | 2 | 2 | 2 |

(continued)

| (Table 1) | | | | (parts by mass) |
|---|---|---|---|---|
| | A | B | C | D |
| Zinc oxide | 2 | 2 | 2 | 2 |
| Sulfur | 1.6 | 0.8 | 0.8 | 1.6 |
| Crosslinking agent | 0 | 1 | 1 | 0 |
| Vulcanization accelerator | | | | |
| BBS | 1.8 | 1.8 | 1.8 | 1.8 |
| DPG | 2.2 | 2.2 | 2.2 | 2.2 |
| Specific gravity | 1.155 | 1.133 | 1.133 | 1.142 |
| R (%) | 44 | 35 | 24 | 62 |

[Table 2]

| (Table 2) | | | | (parts by mass) |
|---|---|---|---|---|
| | E | F | G | H |
| Base rubber | | | | |
| SBR 1 | 0 | 50 | 0 | 0 |
| SBR 2 | 100 | 50 | 0 | 0 |
| IIR | 0 | 0 | 100 | 100 |
| Carbon black | 5 | 5 | 5 | 40 |
| Silica | 60 | 60 | 60 | 30 |
| Coupling agent | 5.2 | 5.2 | 5.2 | 2.6 |
| Oil | 28 | 30 | 24 | 20 |
| Antioxidant | | | | |
| TMQ | 0 | 0 | 0 | 0.5 |
| AO | 5 | 5 | 5 | 0 |
| Stearic acid | 2 | 2 | 2 | 2 |
| Zinc oxide | 2 | 2 | 2 | 2 |
| Sulfur | 0.8 | 1.6 | 1.8 | 1.8 |
| Crosslinking agent | 1 | 0 | 0 | 0 |
| Vulcanization accelerator | | | | |
| BBS | 1.8 | 1.8 | 1.8 | 1.8 |
| DPG | 2.2 | 2.2 | 2.2 | 2.2 |
| Specific gravity | 1.139 | 1.135 | 1.178 | 1.186 |
| R (%) | 46 | 40 | 48 | 64 |

The details of the compounds listed in Tables 1 and 2 are as follows.

Base rubber SBR 1: the styrene-butadiene rubber of Production Example 1 (degree of hydrogenation: 96% by mole, styrene content: 30% by mass, weight-average molecular weight: 450 thousand, glass transition temperature: -31°C)
Base rubber SBR 2: the styrene-butadiene rubber of Production Example 2 (styrene content: 25% by mass, vinyl content: 59% by mass)
Carbon black: trade name "SEAST 9H" (DBP absorption amount: 115 ml/g, BET specific surface area: 110 m$^2$/g) manufactured by Tokai Carbon Co., Ltd.
Silica: trade name "ULTRASIL VN3" ($N_2SA$: 175 m$^2$/g) manufactured by Evonik Degussa GmbH
Coupling agent: 8-mercaptooctanoyltriethoxysilane, trade name "NXT", manufactured by Momentive
Oil: TDAE oil, trade name "Vivatec 500", manufactured by H&R
Antioxidant TMQ: 2,2,4-trimethyl-1,2-dihydroquinoline polymer, trade name "NOCRAC 224", manufactured by Ouchi Shinko Chemical Industrial Co., Ltd.
Antioxidant AO: 3,9-bis{2-[3-(3-tert-butyl-4-hydroxy-5-methylphenyl)propionyloxy]-1,1-dimethylethyl}-2,4,8,10-tetraoxaspiro[5.5]undecane, trade name "ADEKA STAB AO-80", manufactured by ADEKA Corporation
Stearic acid: trade name "Tsubaki", manufactured by NOF Corporation
Zinc oxide: trade name "Zinc Oxide Type-2", manufactured by Mitsui Mining & Smelting Co., Ltd.
Sulfur: powdery sulfur manufactured by Tsurumi Chemical Industry Co., Ltd.
Crosslinking agent: 1,6-bis(N,N'-dibenzylthiocarbamoyldithio)hexane, trade name "Vulcuren VP KA9188" (amount of sulfur: 20.6% by mass), manufactured by LANXESS
Vulcanization accelerator BBS: N-tert-butyl-2-benzothiazolyl sulfenamide, trade name "NOCCELER NS", manufactured by Ouchi Shinko Chemical Industrial Co., Ltd.
Vulcanization accelerator DPG: 1,3-diphenylguanidine, trade name "SOXINOL D", manufactured by Sumitomo Chemical Company, Limited

(Wear Test)

First, the test piece A1 was set on a testing device having the basic structure shown in FIG. 7. A grinding plate having the structure shown in FIGS. 5 and 6 was mounted on the pressing plate of the testing device. The grinding plate has one linear projection (length: 50 mm), and a cross-sectional shape thereof was a mountain shape (an equilateral triangle shape with a side length of 5 mm, the radius of curvature of a distal end portion was 0.01 mm). Subsequently, the testing device was operated in a nitrogen atmosphere (room temperature, oxygen concentration: 0.1% by volume or less, relative humidity: 15%), and a wear test was conducted on the test piece A1 under the following conditions.

Load: 0.8 kgf
Rotation speed: 60 rpm
Slip angle: 0°
Rotation time: 20 minutes

Next, the test piece A2 was set on the testing device in place of the test piece A1. Thereafter, a wear test was conducted on the test piece A2 in the same manner as the test piece A1, except that the nitrogen atmosphere was changed to an air atmosphere (room temperature, oxygen concentration: 21% by volume, relative humidity: 50%).

(Calculation of Change Rate R)

Changes in the mass of the test pieces A1 and A2 before and after the wear test were measured and divided by the specific gravity shown in Table 1, thereby calculating wear volumes. The wear volumes were divided by the rotation time to obtain wear amounts per unit time. The wear amount Ci obtained for the test piece A1 and the wear amount Ca obtained for the test piece A2 were substituted into the following equation, thereby calculating a change rate R (%) of the vulcanized rubber of Makeup A. The specific gravity d of the vulcanized rubber was measured according to the method described in JIS K6268 "Rubber, vulcanized-Determination of density".
Similarly, a wear test was conducted on the test pieces B 1 to H1 and B2 to H2, and change rates R (%) of the vulcanized rubbers of Makeups B to H were calculated. The obtained results are shown in Table 1 and Table 2. A makeup having a smaller R (%) has smaller contribution to chemical wear.

$$\text{Change rate R } (\%) = (Ca\text{-}Ci)/Ca \times 100$$

[Test 2]

(Production of Test Tires)

Similar to Test 1, rubber compositions of Makeups A to H were prepared, and then, each was extruded into the shape of a tread. Each of the obtained treads was attached together with other tire members and press-vulcanized at 183°C for 10 minutes, thereby producing test tires A to H (tire size: 195/65R15) having the basic structure shown in FIG. 1.

(Vehicle Running Test)

Each of the obtained test tires A to H was fitted onto a normal rim and inflated with air to an internal pressure of 180 kPa. Then, a running test was conducted to evaluate wear resistance. Specifically, a driver drove a test vehicle (an FF car produced in Japan with an engine displacement of 2000 cc) having the tires mounted thereon, on a test course having an asphalt road surface at a speed of 80 km/hour for 30,000 km. Thereafter, the groove depth (unit: mm) of the tread was measured, and the running distance per 1 mm of depth decreased due to the running (unit: km/mm) was calculated. An index obtained with the value for the test tire D being regarded as 100 is shown as wear resistance 1 in Tables 3 and 4 below. The higher the value is, the higher the evaluation is.

[Table 3]

(Table 3)

|  |  | Tire A | Tire B | Tire C | Tire D |
|---|---|---|---|---|---|
| Change rate R | [%] | 44 | 35 | 24 | 62 |
| Wear resistance 1 | [-] | 160 | 195 | 220 | 100 |

[Table 4]

(Table 4)

|  |  | Tire E | Tire F | Tire G | Tire H |
|---|---|---|---|---|---|
| Change rate R | [%] | 46 | 40 | 48 | 64 |
| Wear resistance 1 | [-] | 145 | 180 | 140 | 95 |

In Tables 3 and 4, the change rates R (%) obtained in Test 1 are also shown for comparison. The test tires A to C and E to G each include a tread formed from a vulcanized rubber having a change rate R not greater than 60%. The test tires D and H each include a tread formed from a vulcanized rubber of Makeups D and H each having a change rate R greater than 60%. From Tables 3 and 4, it is found that the wear resistance of the obtained tire was improved by using the vulcanized rubber having a makeup having a small change rate R (%) not greater than 60% and having small contribution to chemical wear. For the tire G obtained with isobutylene-isoprene-rubber as a base rubber, wear resistance was improved, but deterioration of low fuel consumption performance, wet grip performance, etc., was observed. Meanwhile, for the tires A to C, no influence on other tire performance was observed.

[Test 3]

Similar to Test 1, test pieces formed from vulcanized rubbers of Makeups A and D were prepared. A wear test was conducted on each test piece in an air atmosphere (room temperature, oxygen concentration: 21% by volume, relative humidity: 50%) using the testing device described above in Test 1, and a wear amount per unit time was obtained. The test conditions are as follows.

Load: 0.8 kgf
Rotation speed: 60 rpm
Slip angle: 0°
Rotation time: 20 minutes
An index obtained with the wear amount for Makeup D being regarded as 100 is shown as a wear index in Table 5 below. The lower the value is, the higher the evaluation is.

[Table 5]

(Table 5)

|  |  | A | D |
|---|---|---|---|
| Wear index | [-] | 90 | 100 |
| Wear resistance 2 | [-] | 160 | 100 |

In Table 5, the evaluation results by the vehicle running test described above are also shown as wear resistance 2 for comparison. The wear resistance 2 is an index obtained with the value for the test tire D being regarded as 100. From Table 5, it is found that the wear index by Test 3 does not reflect the wear resistance 2 by the vehicle test.

[Test 4]

Similar to Test 1, a plurality of test pieces formed from vulcanized rubbers of Makeups A to D were prepared. A wear test was conducted in the same manner as Test 1, except that the oxygen concentration of the nitrogen atmosphere was set to 16% by volume (room temperature, relative humidity 15%), and a wear amount $C_i$ per unit time was obtained. A change rate R was calculated from the wear amount $C_i$ obtained in the nitrogen atmosphere and a wear amount $C_a$ per unit time obtained in an air atmosphere. The obtained results are shown in Table 6 below.

[Table 6]

(Table 6)

|  |  | Tire A | Tire B | Tire C | Tire D |
|---|---|---|---|---|---|
| Change rate R | [%] | 8 | 7 | 4 | 10 |
| Wear resistance 1 | [-] | 160 | 195 | 220 | 100 |

In Table 6, the results (wear resistance) of the vehicle running test of the test tires A to D obtained in Test 2 are also shown for comparison. As shown in Table 6, the change rate R obtained in the nitrogen atmosphere having an oxygen concentration of 16% by volume correlates with the results of the vehicle running test, but the correlation was lower than that in Test 2.

As shown in Tables 3 and 4, the evaluation is higher in the test tires A to C of the Examples than in the test tire D of the Comparative Example. In addition, as shown in Tables 3 to 6, the wear performance obtained by the evaluation method according to the present invention highly correlates with the vehicle running test results. From the evaluation results, advantages of the present invention are clear.

The pneumatic tire described above can be mounted to various vehicles. In addition, the evaluation method described above can be applied to production of tires having various shapes and including members formed from vulcanized rubbers.

A pneumatic tire having excellent wear resistance is provided. The tire includes a member formed from a vulcanized rubber having a makeup for which a change rate R defined by the equation: $R = (C_a - C_i)/C_a \times 100$ using a wear amount $C_i$ obtained in a wear test in a nitrogen atmosphere (oxygen concentration: 0.1% by volume or less) and a wear amount $C_a$ obtained in a wear test in an air atmosphere (oxygen concentration: 21% by volume) is not greater than 60%. The wear amounts $C_i$ and $C_a$ are each obtained by: rotating a cylindrical test piece formed from the vulcanized rubber, in a circumferential direction thereof in a state where a grinding plate having a linear projection is pressed against an outer peripheral surface of the test piece and a load is applied to the test piece, thereby conducting a wear test; and dividing a wear volume calculated from a specific gravity of the vulcanized rubber and a mass change of the test piece measured before and after the wear test, by a total rotation time.

**Claims**

1. A pneumatic tire (2) comprising a member formed from a vulcanized rubber having a makeup for which a change rate R (%) defined by the following equation is not greater than 60% when: a cylindrical test piece (32) (outer diameter: 78 mm, inner diameter: 34 mm, width in an axial direction thereof: 18 mm) formed from the vulcanized rubber and a testing device (100) including a grinding plate (34) having one linear projection (36) (an equilateral triangle shape with a side length of 5 mm in a cross-sectional view, a radius of curvature of a distal end portion (R)

is 0.01 mm) are prepared; the test piece (32) is rotated in a circumferential direction thereof at a rotation speed of 60 rpm and a slip angle of 0° in a state where a surface of the grinding plate (34) on which the linear projection (36) is formed is pressed against an outer peripheral surface of the test piece (32) and a load of 0.8 kgf is applied to the test piece (32), thereby conducting a wear test; and a wear amount per unit time (unit: $cm^3/min$) is obtained by dividing a wear volume (unit: $cm^3$), which is obtained by dividing a mass change of the test piece (32) measured before and after the wear test by a specific gravity of the vulcanized rubber, by a total rotation time (unit: min) of the test piece (32),

$$\text{change rate } R\ (\%) = (\text{Ca-Ci})/\text{Ca} \times 100,$$

where Ci is a wear amount obtained in a wear test in a nitrogen atmosphere (room temperature, oxygen concentration: 0.1% by volume or less, relative humidity: 15%), and Ca is a wear amount obtained in a wear test in an air atmosphere (room temperature, oxygen concentration: 21% by volume, relative humidity: 50%).

2. The pneumatic tire (2) according to claim 1, wherein

the member formed from the vulcanized rubber is formed by heating and pressurizing a rubber composition, and the rubber composition contains, as a base rubber, a styrene-butadiene rubber in which a degree of hydrogenation of conjugated diene moieties is not less than 50% by mole and not greater than 99% by mole.

3. The pneumatic tire (2) according to claim 2, wherein a proportion of the styrene-butadiene rubber in the base rubber is not less than 40% by mass and not greater than 100% by mass.

4. The pneumatic tire (2) according to claim 2 or 3, wherein the member formed from the vulcanized rubber is a tread (4).

5. A wear performance evaluation method for a vulcanized rubber, comprising:

a preparation step of preparing at least two test pieces (32) formed from a vulcanized rubber having the same makeup;
a first measurement step of conducting a wear test in an inert atmosphere and obtaining a wear amount Ci per unit time;
a second measurement step of conducting a wear test in an air atmosphere and obtaining a wear amount Ca per unit time; and
an evaluation step of evaluating wear resistance of the vulcanized rubber on the basis of a change rate R (%) calculated by the following equation using the wear amounts Ci and Ca,

$$\text{change rate } R\ (\%) = (\text{Ca-Ci})/\text{Ca} \times 100.$$

6. The wear performance evaluation method according to claim 5, wherein an oxygen concentration of the inert atmosphere is not greater than 15% by volume.

7. The wear performance evaluation method according to claim 5 or 6, wherein the inert atmosphere is a nitrogen atmosphere or an argon atmosphere.

8. The wear performance evaluation method according to any one of claims 5 to 7, wherein, in each of the first measurement step and the second measurement step, the wear test is conducted, using a testing device (100) having a pseudo road surface, by moving the pseudo road surface and the test piece (32) relative to each other for a predetermined time in a state where the pseudo road surface is pressed against the test piece (32) and a load is applied to the test piece (32), a wear volume is obtained by dividing a mass change of the test piece (32) measured before and after the wear test by a specific gravity of the vulcanized rubber, and the wear amount Ci and the wear amount Ca per unit time were each obtained by dividing the wear volume by the time of the relative movement.

9. The wear performance evaluation method according to claim 8, wherein

each of the test pieces (32) has a cylindrical shape,
the pseudo road surface has one or a large number of linear projections (36), and

in the wear test, the test piece (32) is rotated in the circumferential direction thereof in a state where said one or said large number of linear projections (36) are pressed against an outer peripheral surface of the test piece (32) and a load is applied to the test piece (32).

**Patentansprüche**

1. Luftreifen (2) mit einem Element, das aus einem vulkanisierten Kautschuk ausgebildet ist, der eine Aufmachung hat, für die eine Änderungsrate R (%), die durch die folgende Gleichung definiert wird, nicht größer als 60% ist, wenn: ein zylindrischer Probekörper (32) (Außendurchmesser: 78 mm, Innendurchmesser: 34 mm, Breite in einer Axialrichtung von ihm: 18 mm), der aus dem vulkanisierten Kautschuk ausgebildet ist, und eine Prüfvorrichtung (100), die eine Schleifplatte (34) mit einem linearen Vorsprung (36) (eine gleichseitige Dreiecksform mit einer Seitenlänge von 5 mm in einer Querschnittsansicht, ein Krümmungsradius eines fernen Endabschnitts (R) beträgt 0,01 mm) vorbereitet werden; der Probekörper (32) in einer Umfangsrichtung von ihm mit einer Drehzahl von 60 U/min und einem Schräglaufwinkel von 0° in einem Zustand gedreht wird, in dem eine Oberfläche der Schleifplatte (34), auf der der lineare Vorsprung (36) ausgebildet ist, gegen eine Außenumfangsfläche des Probekörpers (32) gedrückt wird und auf den Probekörper (32) eine Last von 0,8 kgf aufgebracht wird, wodurch eine Verschleißprüfung durchgeführt wird; und eine Verschleißmenge pro Zeiteinheit (Einheit: cm³/min) erhalten wird, indem ein Verschleißvolumen (Einheit: cm³), das erhalten wird, indem eine Masseänderung des Probekörpers (32), die vor und nach der Verschleißprüfung gemessen wurde, durch eine spezifische Dichte des vulkanisierten Kautschuks geteilt wird, durch eine Gesamtdrehbewegungsdauer (Einheit: min) des Probekörpers (32) geteilt wird,

$$\text{Änderungsrate R (\%)} = (C_a - C_i)/C_a \times 100,$$

   wobei $C_i$ eine Verschleißmenge ist, die bei einer Verschleißprüfung in einer Stickstoffatmosphäre (Raumtemperatur, Sauerstoffkonzentration: 0,1 Volumen-% oder weniger, relative Feuchte: 15%) erhalten wird, und $C_a$ eine Verschleißmenge ist, die bei einer Verschleißprüfung in einer Luftatmosphäre (Raumtemperatur, Sauerstoffkonzentration: 21 Volumen-%, relative Feuchte: 50%) erhalten wird.

2. Luftreifen (2) nach Anspruch 1, wobei

   das aus dem vulkanisierten Kautschuk ausgebildete Element durch Erhitzen und Druckbeaufschlagen einer Kautschukzusammensetzung ausgebildet ist und
   die Kautschukzusammensetzung als Basiskautschuk einen StyrolButadien-Kautschuk enthält, in dem ein Hydrierungsgrad konjugierter Dienanteile nicht weniger als 50 Mol-% und nicht mehr als 99 Mol-% beträgt.

3. Luftreifen (2) nach Anspruch 2, wobei ein Anteil des Styrol-Butadien-Kautschuks im Basiskautschuk nicht weniger als 40 Masse-% und nicht mehr als 100 Masse-% beträgt.

4. Luftreifen (2) nach Anspruch 2 oder 3, wobei das aus dem vulkanisierten Kautschuk ausgebildete Element eine Lauffläche (4) ist.

5. Ein Verschleißleistungsbewertungsverfahren für einen vulkanisierten Kautschuk, das Folgendes umfasst:

   einen Anfertigungsschritt, in dem mindestens zwei Probekörper (32) angefertigt werden, die aus einem vulkanisierten Kautschuk ausgebildet sind, der dieselbe Aufmachung hat;
   einen ersten Messschritt, in dem eine Verschleißprüfung in einer Schutzgasatmosphäre durchgeführt wird und eine Verschleißmenge $C_i$ pro Zeiteinheit ermittelt wird;
   einen zweiten Messschritt, in dem eine Verschleißprüfung in einer Luftatmosphäre durchgeführt wird und eine Verschleißmenge $C_a$ pro Zeiteinheit ermittelt wird; und
   einen Bewertungsschritt in dem eine Verschleißbeständigkeit des vulkanisierten Kautschuks auf der Grundlage einer Änderungsrate R (%) bewertet wird, die unter Verwendung der Verschleißmengen $C_i$ und $C_a$ durch die folgende Gleichung berechnet wird,

$$\text{Änderungsrate R (\%)} = (C_a - C_i)/C_a \times 100.$$

6. Verschleißleistungsbewertungsverfahren nach Anspruch 5, wobei eine Sauerstoffkonzentration der Schutzgasatmosphäre nicht größer als 15 Volumen-% ist.

7. Verschleißleistungsbewertungsverfahren nach Anspruch 5 oder 6, wobei die Schutzgasatmosphäre eine Stickstoffatmosphäre oder eine Argonatmosphäre ist.

8. Verschleißleistungsbewertungsverfahren nach einem der Ansprüche 5 bis 7, wobei in jedem von dem ersten Messschritt und dem zweiten Messschritt die Verschleißprüfung unter Verwendung einer Prüfvorrichtung (100) erfolgt, die eine Pseudostraßenoberfläche hat, indem die Pseudostraßenoberfläche und der Probekörper (32) für eine bestimmte Dauer relativ zueinander in einem Zustand bewegt werden, in dem die Pseudostraßenoberfläche gegen den Probekörper (32) gedrückt wird und auf den Probekörper (32) eine Last aufgebracht wird, ein Verschleißvolumen erhalten wird, indem eine Masseänderung des Probekörpers (32), die vor und nach der Verschleißprüfung gemessen wurde, durch eine spezifische Dichte des vulkanisierten Kautschuks dividiert wird, und die Verschleißmenge Ci und die Verschleißmenge Ca pro Zeiteinheit jeweils erhalten wurden, indem das Verschleißvolumen durch die Dauer der Relativbewegung dividiert wurde.

9. Verschleißleistungsbewertungsverfahren nach Anspruch 8, wobei

jeder der Probekörper (32) eine zylindrische Form hat,
die Pseudostraßenoberfläche einen oder eine große Anzahl von linearen Vorsprüngen (36) hat und
der Probekörper (32) bei der Verschleißprüfung in der Umfangsrichtung von ihm in einem Zustand gedreht wird, in dem der eine oder die große Anzahl an linearen Vorsprüngen (36) gegen eine Außenumfangsfläche des Probekörpers (32) gedrückt wird und auf den Probekörper (32) eine Last aufgebracht wird.

**Revendications**

1. Bandage pneumatique (2) comprenant un élément formé à partir d'un caoutchouc vulcanisé ayant une constitution pour laquelle un taux de changement R (%) défini par l'équation suivante n'est pas supérieur à 60 % lorsque : une pièce d'essai (32) cylindrique (diamètre extérieur : 78 mm, diamètre intérieur : 34 mm, largeur dans une direction axiale de celle-ci : 18 mm) formée à partir du caoutchouc vulcanisé et un dispositif d'essai (100) comportant une plaque de meulage (34) ayant une saillie linéaire (36) (une forme de triangle équilatéral avec une longueur de côté de 5 mm dans une vue en coupe transversale, un rayon de courbure d'une partie d'extrémité distale (R) est de 0,01 mm) sont préparés ; la pièce d'essai (32) est mise en rotation dans une direction circonférentielle de celle-ci à une vitesse de rotation de 60 tr/min et à un angle de glissement de 0° dans un état où une surface de la plaque de meulage (34) sur laquelle la saillie linéaire (36) est formée est pressée contre une surface périphérique extérieure de la pièce d'essai (32) et une charge de 0,8 kgf est appliquée à la pièce d'essai (32), effectuant ainsi un essai d'usure ; et une quantité d'usure par unité de temps (unité : $cm^3$/min) est obtenue en divisant un volume d'usure (unité : $cm^3$), qui est obtenu en divisant un changement de masse de la pièce d'essai (32) mesuré avant et après l'essai d'usure par une gravité spécifique du caoutchouc vulcanisé, par un temps de rotation total (unité : min) de la pièce d'essai (32),

$$\texttt{taux de changement R (\%) = (Ca-Ci)/Ca × 100,}$$

où Ci est une quantité d'usure obtenue dans un essai d'usure dans une atmosphère d'azote (température ambiante, concentration d'oxygène : 0,1% en volume ou moins, humidité relative : 15%), et Ca est une quantité d'usure obtenue dans un essai d'usure dans une atmosphère d'air (température ambiante, concentration d'oxygène : 21% en volume, humidité relative : 50%).

2. Bandage pneumatique (2) selon la revendication 1, dans lequel

l'élément formé à partir du caoutchouc vulcanisé est formé en chauffant et en mettant sous pression une composition de caoutchouc, et
la composition de caoutchouc contient, en tant que caoutchouc de base, un caoutchouc styrène-butadiène dans lequel le degré d'hydrogénation de fragments de diène conjugué n'est pas inférieur à 50% en mole et n'est pas supérieur à 99% en mole.

**3.** Bandage pneumatique (2) selon la revendication 2, dans lequel une proportion du caoutchouc styrène-butadiène dans le caoutchouc de base n'est pas inférieure à 40% en masse et n'est pas supérieure à 100% en masse.

**4.** Bandage pneumatique (2) selon la revendication 2 ou 3, dans lequel l'élément formé à partir du caoutchouc vulcanisé est une bande de roulement (4).

**5.** Procédé d'évaluation de performance d'usure pour un caoutchouc vulcanisé, comprenant :

une étape de préparation consistant à préparer au moins deux pièces d'essai (32) formées à partir d'un caoutchouc vulcanisé ayant la même constitution ;
une première étape de mesure consistant à effectuer un essai d'usure dans une atmosphère inerte et à obtenir une quantité d'usure Ci par unité de temps ;
une deuxième étape de mesure consistant à effectuer un essai d'usure dans une atmosphère d'air et à obtenir une quantité d'usure Ca par unité de temps ; et
une étape d'évaluation consistant à évaluer la résistance à l'usure du caoutchouc vulcanisé sur la base d'un taux de changement R (%) calculé par l'équation suivante en utilisant les quantités d'usure Ci et Ca,

```
taux de changement R (%) = (Ca-Ci)/Ca × 100.
```

**6.** Procédé d'évaluation de performance d'usure selon la revendication 5, dans lequel une concentration en oxygène de l'atmosphère inerte n'est pas supérieure à 15% en volume.

**7.** Procédé d'évaluation de performance d'usure selon la revendication 5 ou 6, dans lequel l'atmosphère inerte est une atmosphère d'azote ou une atmosphère d'argon.

**8.** Procédé d'évaluation de performance d'usure selon l'une quelconque des revendications 5 à 7, dans lequel, dans chacune parmi la première étape de mesure et la deuxième étape de mesure, l'essai d'usure est effectué à l'aide d'un dispositif d'essai (100) ayant une pseudo surface de route, en déplaçant la pseudo surface de route et la pièce d'essai (32) l'une par rapport à l'autre pendant un temps prédéterminé dans un état où la pseudo surface de route est pressée contre la pièce d'essai (32) et une charge est appliquée à la pièce d'essai (32), un volume d'usure est obtenu en divisant un changement de masse de la pièce d'essai (32) mesuré avant et après l'essai d'usure par une gravité spécifique du caoutchouc vulcanisé, et la quantité d'usure Ci et la quantité d'usure Ca par unité de temps sont chacune obtenues en divisant le volume d'usure par le temps du mouvement relatif.

**9.** Procédé d'évaluation de performance d'usure selon la revendication 8, dans lequel

chacune des pièces d'essai (32) a une forme cylindrique,
la pseudo surface de route a une ou un grand nombre de saillies linéaires (36), et
dans l'essai d'usure, la pièce d'essai (32) est mise en rotation dans la direction circonférentielle de celle-ci dans un état où ladite une ou ledit grand nombre de saillies linéaires (36) sont pressées contre une surface périphérique extérieure de la pièce d'essai (32) et une charge est appliquée à la pièce d'essai (32).

FIG. 1

FIG. 2

```
                    ┌─────────┐
                    │  START  │
                    └─────────┘
                         │
                         ▼
          ┌──────────────────────────┐
          │     PREPARATION STEP      │
          └──────────────────────────┘
              │                  │
              ▼                  ▼
   ┌────────────────────┐  ┌────────────────────┐
   │ FIRST MEASUREMENT  │  │ SECOND MEASUREMENT │
   │STEP (INERT ATMOSPHERE)│ │STEP (AIR ATMOSPHERE)│
   └────────────────────┘  └────────────────────┘
              │                  │
              └────────┬─────────┘
                       ▼
          ┌──────────────────────────┐
          │     EVALUATION STEP       │
          └──────────────────────────┘
                       │
                       ▼
                  ┌─────────┐
                  │   END   │
                  └─────────┘
```

FIG. 3

FIG. 4

32

FIG. 5

34

36

38

L

FIG. 6

FIG. 7